# EUROPÄISCHE PATENTSCHRIFT

(11) **EP 3 830 769 B1**
(45) Veröffentlichungstag und Bekanntmachung des Hinweises auf die Patenterteilung: **26.06.2024**
(21) Anmeldenummer: 18779253.6
(22) Anmeldetag: 17.09.2018
(51) Int. Cl.: G06Q 10/04, G06Q 50/04

(54) **VERFAHREN UND VORRICHTUNG ZUR RECHNERGESTÜTZTEN OPTIMIERUNG VON WERKZEUGTRANSPORTEN FÜR MINDESTENS EIN EINE ANZAHL VON MAGAZINPLÄTZEN AUFWEISENDES WERKZEUGMAGAZIN**
METHOD AND APPARATUS FOR COMPUTER-IMPLEMENTED OPTIMIZATION OF TOOL TRANSPORTS FOR A TOOL MAGAZINE WITH MULTIPLE TOOL SLOTS
PROCÉDÉ ET APPAREIL MIS EN OEUVRE PAR ORDINATEUR POUR OPTIMISER LES TRANSPORTS D'OUTILS POUR UN CHARGEUR D'OUTILS AVEC DES PLACES D'OUTILS MULTIPLES

(43) Veröffentlichungstag der Anmeldung: 09.06.2021
(73) Patentinhaber: Siemens Aktiengesellschaft, 80333 München (DE)
(72) Erfinder: BAIER, Georg, 81241 München (DE); HUPP, Lena, 81371 München (DE); ROYER, Christian, 85521 Ottobrunn (DE); BECHER, Silvio, 81827 München (DE)
(74) Vertreter: Siemens Patent Attorneys
(86) Internationale Anmeldenummer: PCT/EP2018/074999
(87) Internationale Veröffentlichungsnummer: WO 2020/057713

(56) Entgegenhaltungen:
- DE-A1-102011 088 055
- R.B.R. DE SOUZA ET AL: "A tool cluster based strategy for the management of cutting tools in flexible manufacturing systems", JOURNAL OF OPERATIONS MANAGEMENT, Bd. 10, Nr. 1, 1. Januar 1991 (1991-01-01) , Seiten 73-91, XP055283607, US ISSN: 0272-6963, DOI: 10.1016/0272-6963(91)90036-W
- Alwin Oerlemans: "PRODUCTION PLANNING FOR FLEXIBLE MANUFACTURING SYSTEMS", , 9. Oktober 1992 (1992-10-09), XP055545320, Gefunden im Internet: URL:https://www.merit.unu.edu/training/the ses/oerlemans_alwin.pdf [gefunden am 2019-01-21]
- Anonymous: "Travelling salesman problem - Wikipedia", , 28. August 2018 (2018-08-28), XP055545287, Gefunden im Internet: URL:https://en.wikipedia.org/w/index.php?t itle=Travelling_salesman_problem&oldid=856 886923 [gefunden am 2019-01-21]

## Beschreibung

Verfahren und Vorrichtung zur rechnergestützten Optimierung von Werkzeugtransporten für mindestens ein eine Anzahl von Magazinplätzen aufweisendes Werkzeugmagazin

Die Erfindung betrifft ein Verfahren und eine Vorrichtung zur rechnergestützten Optimierung von Werkzeugtransporten für mindestens ein eine Anzahl von Magazinplätzen aufweisendes Werkzeugmagazin, das für eine Werkzeugmaschine verwendbar ist, welche zur Fertigung von einem oder mehreren Werkstücken mit Hilfe der von einem Magazingerät an einem Bereitstellungsplatz bereitgestellten Werkzeuge eingesetzt wird.

Eine Werkzeugmaschine ist eine automatisierte Fertigungseinrichtung mit der eine vorgegebene Form an einem Werkstück mittels eines oder mehrerer Werkzeuge erzeugt wird. Mehrere Werkzeuge können einem Werkzeugtyp z.B. Fräsen zugeordnet sein. Ein anderer Werkzeugtyp kann z.B. Bohren sein. Eine Werkzeugmaschine besitzt eine Werkzeugspindel, in der sich das bearbeitende Werkzeug, auch Spindelwerkzeug genannt, bei der Bearbeitung befindet.

Die Werkzeuge, die von der Werkzeugmaschine zur Bearbeitung eines Werkstücks verwendet werden können, sind in einem Werkzeugmagazin abgelegt. Davon gibt es verschiedene Arten. Eine sehr häufig verwendete Form sind Kettenmagazine, die z.B. in der Automobilindustrie zum Einsatz kommen.

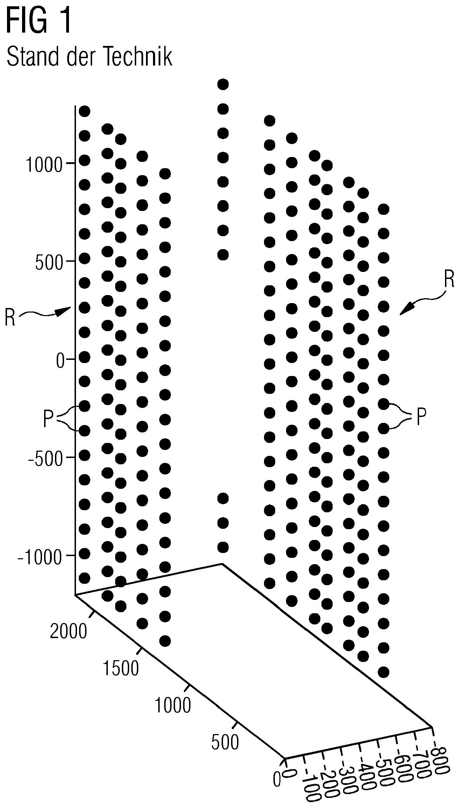

Eine weitere Magazinart sind Regalmagazine R, wie es beispielsweise in Figur 1 angedeutet ist, in denen sehr viele verschiedene Werkzeuge untergebracht werden können (bis zu 500 Werkzeuge oder sogar eventuell noch mehr). Die Werkzeuge sind darin auf festen Magazinplätzen P abgelegt. Ein solches Magazin kann aus einer Hauptseite und einer gegenüberliegenden Gegenseite bestehen.

Das Regalmagazin besitzt eine Vorrichtung insbesondere ein Magazingerät, das in der Figur 1 nicht dargestellt ist, mit der ein Werkzeug auf seinem Magazinplatz P abgelegt und geholt werden kann. Diese Magazinart wird vor allem dann verwendet, wenn eine größere Vielfalt von unterschiedlichen Werkstücken, für die eine Vielzahl an unterschiedlichen Werkzeugen benötigt wird, mit einer Werkzeugmaschine produziert werden soll.

Die Bearbeitung eines Werkstücks eines bestimmten Werkstücktyps erfolgt mit einer vorgegebenen Sequenz von Werkzeugen. Ein Werkzeug kann dabei durchaus mehrmals in dieser Sequenz vorkommen. Die Sequenz ist für alle Werkstücke eines Werkstücktyps z.B. Autositz die gleiche. Die Sequenz kann für Werkstücke eines anderen Werkstücktyps eine andere sein.

Während eines Arbeitsschritts der Bearbeitung eines Werkstücks mit einem Werkzeug der Sequenz, dem Spindelwerkzeug, wird im Regalmagazin das "Vorgängerwerkzeug" des vorhergehenden Arbeitsschritts auf seinen Magazinplatz zurückgefahren bzw. zurückgelegt. Anschließend erfolgt eine Leerfahrt zum Magazinplatz des "Nachfolgerwerkzeugs" des nachfolgenden Arbeitsschrittes. Dieses wird dann aufgenommen und zu einem Bereitstellungsplatz transportiert bzw. transferiert. Ist der aktuelle Arbeitsschritt, d.h. die Bearbeitung mit dem aktuellen Spindelwerkzeug beendet, so erfolgt ein Austausch des Werkzeugs in der Spindel (z.B. mit einem Werkzeugwechsler). Falls die Bearbeitung mit dem Spindelwerkzeug beendet ist, aber das Nachfolgerwerkzeug für den folgenden Arbeitsschritt noch nicht bereitsteht, entsteht eine Wartezeit bei der Spindelversorgung. Diese einzelnen Wartezeiten reduzieren die Maschinen-Effizienz und erhöhen die Produktionsdauer. Deshalb sollen diese Wartezeiten vermieden werden.

Bei den Platzierungen und Umlagerungen von Werkzeugen im Regalmagazin sind folgende Platzrestriktionen zu beachten:
Ein Werkzeug darf gewöhnlich nicht an jeden Magazinplatz gestellt werden, d.h. es gibt für das Werkzeug belegbare Magazinplätze unter den folgenden Bedingungen:
- Der Magazinplatztyp des Werkzeugs, und der Magazinplatztyp des Magazins bzw. Regalplatzes müssen kompatibel sein. So dürfen z.B. schwere Werkzeuge nicht auf Magazinplätze für leichte Werkzeuge gestellt werden und ggf. umgekehrt.
- Werkzeuge dürfen am Rand nicht überragen.
- Auf gesperrten Magazinplätzen dürfen keine Werkzeuge stehen.

Eine zulässige Magazinbelegung ist eine Anordnung der Werkzeuge im Magazin, so dass jedes Werkzeug sich auf einem belegbaren Platz befindet und die Platzbedarfe der Werkzeuge sich nicht überlappen. Zulässige Magazinplätze hängen von der aktuellen Belegung des Werkzeugmagazins ab. Demnach unterliegen alle zulässigen Magazinplätze zusätzlichen Einschränkungen:
- Auf jedem Magazinplatz darf höchstens ein Werkzeug platziert sein
- Der Platzbedarf des Werkzeugs darf sich nicht mit dem Platzbedarf eines anderen, in der Regel benachbarten Werkzeuges im Magazin überlappen.

Werden mehrere Werkstücke hintereinander gefertigt, kann es vorteilhaft sein, die Werkzeuge im Werkzeugmagazin kollisionsfrei umzulagern bzw. umzusortieren, um beispielsweise Wartezeiten bei der Spindelversorgung zu reduzieren und damit die Maschinen-Effizienz zu erhöhen. Eine zulässige Zielzuordnung bzw. -zuweisung der Werkzeuge, die ebenfalls die Platzrestriktionen berücksichtigt, sollte gegeben sein. Kollisionsfrei hinsichtlich des Platzbedarfs bedeutet in diesem Zusammenhang, dass ein Werkzeug auf einen zulässigen Magazinplatz transportiert werden kann.

Es ist Aufgabe der Erfindung, eine Optimierung von Werkzeugtransporten durchzuführen. Es soll die ursprüngliche Werkzeugzuordnung in die Zielzuordnung überführt werden, so dass zu jedem Zeitpunkt im Umsortiervorgang die Zulässigkeit der Magazinbelegung eingehalten wird und die benötigte Zeitdauer für die Werkzeugtransporte bzw. für den Umsortiervorgang minimiert wird.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur rechnergestützten Optimierung von Werkzeugtransporten für mindestens ein eine Anzahl von Magazinplätzen aufweisendes Werkzeugmagazin, das für eine Werkzeugmaschine verwendbar ist, welche zur Fertigung von einem oder mehreren Werkstücken mit Hilfe der von einem Magazingerät an einem Bereitstellungsplatz bereitgestellten Werkzeuge eingesetzt wird, aufweisend folgende Schritte:
a) Erfassen einer Menge von Werkzeugen,
b) Erfassen des Platzbedarfs für jedes Werkzeug,
c) Erfassen einer Menge von belegbaren Magazinplätzen für jedes Werkzeug,
d) Erfassen einer zulässigen Ausgangsmagazinbelegung, wobei ein Ausgangsmagazinplatz für jedes Werkzeug erfasst wird,
e) Erfassen der zulässigen Zielmagazinbelegung, wobei Zielmagazinplätze für zumindest eine Teilmenge aus der erfassten Menge von Werkzeugen erfasst werden, für die ein Werkzeugtransport durchgeführt werden soll,
f) Erfassen einer Menge von Transportzeitdauern, die jeweils eine Fahrt des Magazingeräts von einem Magazinplatz zu einem anderen Magazinplatz braucht,
g) Bestimmen einer Teilmenge von Werkzeugtransporten, für die eine Transportreihenfolge vorgebbar oder vorgegeben ist, so dass die Werkzeuge in dieser Transportreihenfolge kollisionsfrei hinsichtlich des Platzbedarfs von ihrem belegten Magazinplatz zu ihrem Zielmagazinplatz gebracht werden können, und
h) Optimierung der Transportreihenfolge für diese Teilmenge von Werkzeugtransporten derart, dass die Summe der für diese Werkzeugtransporte benötigten Transportzeitdauern minimiert wird.

Der Umsortiervorgang bzw. die Verlagerung von einer gegebenen Transportreihenfolge von Werkzeugen im Magazin läuft in der Regel folgendermaßen ab. Das Magazingerät fährt zum Ausgangsplatz des ersten Werkzeuges in der Transportreihenfolge. Dieses Werkzeug wird dann kollisionsfrei (hinsichtlich seines Platzbedarfs) auf seinen Zielmagazinplatz transportiert. Anschließend fährt das Magazingerät ohne Werkzeug zu dem Ausgangsplatz des zweiten Werkzeugs in der Transportreihenfolge und transportiert dieses wieder kollisionsfrei auf seinen Zielmagazinplatz. Dies wird solange wiederholt bis die gegebene Transportreihenfolge abgearbeitet ist.

Eine solche Teilmenge von Werkzeugtransporten kann zum Beispiel wie folgt bestimmt werden: Suche alle kollisionsfrei ausführbare Werkzeugtransporte und wähle eine beliebige Reihenfolge. Wenn die Menge mindestens ein Element enthält, dann findet man einen solchen Werkzeugtransport.

Der in Schritt g) belegte Magazinplatz kann der aktuell belegte Magazinplatz, der Ausgangsmagazinplatz, aber auch ein Magazinplatz, auf dem das Werkzeug zwischengeparkt ist, sein.

Die Schritte g) und h) können gegebenenfalls mehrfach wiederholt werden bis alle in Schritt e) erfassten Werkzeuge ihren Zielmagazinplatz erreicht haben.

Wenn ein Werkzeug seinen Zielmagazinplatz belegt, wird die Menge der von ihn belegbaren Magazinplätzen auf den Zielmagazinplatz reduziert. Ein solches Werkzeug darf dann nicht mehr verschoben werden.

Die Werkzeugtransporte können anhand der optimierten Transportreihenfolge durchgeführt werden.

Durch das erfindungsgemäße Vorgehen wird die Summe der für diese Werkzeugtransporte benötigten Transportzeitdauern minimiert. Die Menge von Transportzeitdauern kann eine Menge von Leerfahrtzeitdauern für jede werkzeuglose Fahrt des Magazingeräts von einem Magazinplatz zu einem anderen Magazinplatz umfassen. Somit kann die genannte Optimierung derart durchgeführt werden, dass die Summe der Leerfahrtzeitdauern minimiert wird.

Verklemmungen stellen typischerweise einen Zugriffskonflikt auf Ressourcen dar, vorliegend auf die Magazinplätze. Insbesondere können Transportzyklen auftreten, die sich beispielsweise so auswirken, dass ein erstes Werkzeug auf den Platz eines zweiten Werkzeugs transportiert werden soll und umgekehrt und somit eine Verklemmung, auch Deadlock genannt, eintritt.

Beansprucht wird unter anderem, dass zumindest ein Werkzeug aus der erfassten Menge von Werkzeugen von seinem belegten Magazinplatz auf einen anderen belegbaren Magazinplatz kollisionsfrei transportiert wird, um eine mindestens einelementigen Teilmenge von Werkzeugtransporten gemäß Schritt g) zu bestimmen und um mit Schritt h) fortzufahren. Die Schritte g) und h) können gegebenenfalls mehrfach wiederholt werden, solange in Schritt g) mindestens eine einelementige Teilmenge (d.h. die Elemente sind die Werkzeugtransporte) bestimmt werden kann.

Anders ausgedrückt, wird in Schritt g) eine leere Teilmenge bestimmt, so terminiert das Verfahren. Es können aber dann noch Transportzyklen existieren, die nicht aufgelöst sind.

Solche Verklemmungen werden durch das erfindungsgemäße Verfahren gegebenenfalls durch Anwendung einer Tiefensuche in polynomialer Laufzeit erkannt bzw. ermittelt und "entfernt" bzw. für die durchzuführende Optimierung herausgenommen bzw. ausgeschlossen. Zusätzlich können die Werkzeuge, die für einen Werkzeugtransport in einer Folgeabhängigkeit, auch Nachfolgepräzedenz genannt, zu den ermittelten Verklemmungen stehen aus der Optimierung ausgeschlossen werden. Auch die Folgeabhängigkeiten zu den ermittelten Verklemmungen können durch eine Breiten- oder Tiefensuche in polynomialer Laufzeit ermittelt werden.

Um diese Verklemmung aufzulösen, muss zunächst ein erstes Werkzeug, das auf dem Zielmagazinplatz eines zweiten Werkzeugs steht, auf einen anderen Magazinplatz zwischengeparkt werden, um das zweite Werkzeug auf dessen Zielmagazinplatz transportieren zu können.

Demnach kann die genannte Teilmenge von Werkzeugtransporten aus Schritt g) ermittelt werden durch:
a) Bilden von Präzedenzen für die Werkzeugtransporte
b) Ermitteln von Werkzeugtransporten, die in Verklemmungen bei der Belegung der Magazinplätze für die Werkzeugtransporte involviert sind,
c) Bestimmung von Werkzeugtransporten, die in einer Folgeabhängigkeit zu den ermittelten Verklemmungen stehen
d) Bestimmung der Teilmenge von Werkzeugtransporten unter Ausschluss der vorstehend in b) und c) ermittelten Werkzeugtransporte.

Mit anderen Worten ausgedrückt, können solche Verklemmungen durch folgenden heuristischen Ansatz aufgelöst werden.
- Suchen eines zunächst direkt erreichbaren und erst bei Misserfolg eines indirekt erreichbaren, belegbaren Magazinplatzes für ein in eine Verklemmung involviertes Werkzeug,
- Durchführen der entsprechend benötigten Werkzeugtransporte.

Um in einer Weiterbildung der Erfindung "direkt" vorzugehen, wird zumindest ein Werkzeug aus der erfassten Menge von Werkzeugen, das in eine Verklemmung oder in eine Folgeabhängigkeit involviert ist, von dem von ihm belegten Magazinplatz auf einen anderen belegbaren Magazinplatz kollisionsfrei transportiert, um eine mindestens einelementige Teilmenge von Werkzeugtransporten gemäß Schritt g) zu bestimmen und um mit Schritt h) fortzufahren.

Damit kann ein anderes in dieselbe Verklemmung involviertes Werkzeug kollisionsfrei von seinem belegten Magazinplatz auf den freigewordenen Zielmagazinplatz transportiert werden.

Um in einer Weiterbildung der Erfindung "indirekt" vorzugehen, wird zumindest ein Werkzeug aus der erfassten Menge von Werkzeugen von dem von ihm belegten Magazinplatz auf einen anderen belegbaren Magazinplatz kollisionsfrei transportiert, damit mindestens ein in eine Verklemmung oder in eine Folgeabhängigkeit involviertes Werkzeug kollisionsfrei von seinem Magazinplatz auf diesen freigewordenen belegbaren Magazinplatz transportiert werden kann, um eine mindestens einelementige Teilmenge von Werkzeugtransporten gemäß Schritt g) zu bestimmen und um mit Schritt h) fortzufahren.

Normalerweise bleibt das "verschobene" Werkzeug erstmal dort, als sein aktueller belegter Magazinplatz. Falls das Werkzeug einen Zielmagazinplatz hat, wird es später auf diesen transportiert.

Im Ergebnis wird diese optimierte Werkzeugtransportreihenfolge einer Liste einer oder mehrerer bereits oben vorgenommenen Optimierungen hinsichtlich der Werkzeugtransportreihenfolge hinzugefügt. Die Werkzeugtransporte sind damit optimiert, wenn die Werkzeugtransporte anhand der optimierten Transportreihenfolge letztendlich durchgeführt werden können.

Die Gesamtumsortierzeitdauer, die sich aus den Transportzeitdauern ggf. inklusive Leerfahrtzeitdauern ergibt, kann sich aus den Hol-Zeitdauern, die jeweils die Zeitdauer für das Holen eines Werkzeugs durch das Magazingerät von einem für das Werkzeug zulässigen Magazinplatz zu einem für das Werkzeug zulässigen Magazinplatz umfasst und aus den notwendigen Leerfahrt-Zeitdauern, wobei eine Leerfahrt eine Fahrt des Magazingeräts ohne Werkzeug von einem ersten Magazinplatz zu einem anderen zweiten Magazinplatz bedeutet.

Die genannte Optimierung kann mittels nächstgelegener-Nachbar-Heuristik durchgeführt wird. In der Nearest-Neighbour Heuristik wird zu Beginn ein Werkzeugtransport durchgeführt, der kollisionsfrei durchführbar ist. Anschließend wird unter den kollisionsfrei möglichen Transporten, derjenige gewählt für den die Leerfahrt-Zeitdauer vom Zielmagazinplatz des zuletzt transportierten Werkzeugs zum Magazinplatz des gewählten Werkzeugs minimal ist. Dies wird solange durchgeführt, bis alle Werkzeugtransporte durchgeführt sind.

Alternativ kann die genannte Optimierung mittels gemischt ganzzahlig linearer Optimierung durchgeführt werden, die jeweils in den nachstehenden Ausführungsbeispielen näher erläutert werden.

Ein Spezialfall von Optimierungsmethoden ist die lineare Optimierung. Sie befasst sich mit der Optimierung linearer Zielfunktionen über einer Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können für IP-Programme (ganzzahlige Optimierungsmodelle) Standardsolver wie z.B. CPLEX, Scip, Gurobi, Xpress verwendet werden. Typischerweise wird eine Startkonfiguration vorgegeben, die iterativ mittels Optimierung zu einem Zielergebnis geführt wird. Für eine Startkonfiguration des MILP-Modells kann eine Berechnung aus einer nächstgelegener-Nachbar-Heuristik verwendet werden.

Erfindungsgemäß kann ein Modell für die gemischt ganzzahlige lineare Optimierung als sogenanntes asymmetrisches Traveling Salesman Problem unter Berücksichtigung der Präzedenzen formuliert werden, das durch einen Graphen mit Knoten und Kanten repräsentiert werden kann. Dabei können die Knoten jeweils durch ein Tupel bestehend aus Ausgangs- und Zielmagazinplatz aus der erfassten Teilmenge an Werkzeugtransporten repräsentiert werden, deren Ausgangs- und Zielmagazinplatz unterschiedlich sind. Die Kanten können jeweils durch eine Gewichtung ergänzt werden, die sich jeweils aus einer Leerfahrtzeitdauer von einem Zielmagazinplatz des vorangehenden Knotens zu einem Ausgangsmagazinplatz des nachfolgenden Knotens ergibt.

Die Erfindung bringt folgende Vorteile mit sich:
- Automatisierte Umsortierung von Regalmagazinen für Werkzeugmaschinen.
- Sehr kurze Umsortierzeit durch Minimierung der Leerfahrtzeiten.
- Umsortierung von Regalmagazinen zur Minimierung der Wartezeiten bei der Spindelversorgung.
- Verringerung der Stillstandszeit der Werkzeugmaschine, da die Maschine nicht völlig be- und entladen werden muss.

Ein weiterer Aspekt der Erfindung sieht eine Steuereinrichtung vor, die insbesondere zur Durchführung des Verfahrens nach oben genannter Art und dessen Ausführungsformen ausgebildet ist. Die Steuereinrichtung - bzw. -vorrichtung (nicht in Figur 1 gezeigt) kann ein der Werkzeugmaschine beigeordneter und ggf. abgesetzt angeordneter Rechner oder in die Werkzeugmaschine integriertes Steuerungsmodul sein.

Die Steuereinrichtung zur rechnergestützten Optimierung einer Werkzeugtransportreihenfolge für mindestens ein eine Anzahl von Magazinplätzen (P) aufweisendes Werkzeugmagazin (R) weist, das für eine Werkzeugmaschine verwendbar ist, welche zur Fertigung von einem oder mehreren Werkstücken mit Hilfe der von einem Magazingerät an einem Bereitstellungsplatz bereitgestellten Werkzeuge eingesetzt wird, auf:
a) Erfassungseinheit zum Erfassen einer Menge von Werkzeugen,
b) dieselbe oder eine weitere Erfassungseinheit zum Erfassen des Platzbedarfs für jedes Werkzeug,
c) dieselbe oder eine weitere Erfassungseinheit zum Erfassen einer Menge von belegbaren Magazinplätzen für jedes Werkzeug,
d) dieselbe oder eine weitere Erfassungseinheit zum Erfassen einer zulässigen Ausgangsmagazinbelegung, wobei ein Ausgangsmagazinplatz für jedes Werkzeug erfasst wird,
e) dieselbe oder eine weitere Erfassungseinheit zum Erfassen der zulässigen Zielmagazinbelegung, wobei Zielmagazinplätze für zumindest eine Teilmenge aus der erfassten Menge von Werkzeugen erfasst werden, für die ein Werkzeugtransport durchgeführt werden soll,
f) dieselbe oder eine weitere Erfassungseinheit zum Erfassen einer Menge von Transportzeitdauern, die jeweils eine Fahrt des Magazingeräts von einem Magazinplatz zu einem anderen Magazinplatz braucht,
g) eine Bestimmungseinheit zum Bestimmen einer Teilmenge von Werkzeugtransporten, für die eine Transportreihenfolge vorgebbar oder vorgegeben ist, so dass die Werkzeuge in dieser Transportreihenfolge kollisionsfrei hinsichtlich des Platzbedarfs von ihrem belegten Magazinplatz zu ihrem Zielmagazinplatz gebracht werden können, und
h) eine Optimierungseinheit zum Optimierung der Transportreihenfolge für diese Teilmenge von Werkzeugtransporten derart, dass die Summe der für diese Werkzeugtransporte benötigten Transportzeitdauern minimiert ist oder wird.

Die Einheiten können hardware-, firmware- und/oder softwaremäßig implementiert sein.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einer Steuereinrichtung der oben genannten Art abläuft oder auf einem computerlesbaren Medium gespeichert ist.

Das Computerprogramm bzw. -produkt kann auf einem computerlesbaren Medium gespeichert sein. Das Computerprogramm bzw. - produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuereinrichtung oder in deren Mitteln integriert sein.

Die Steuereinrichtung sowie das Computerprogramm(-produkt) können analog zum oben genannten Verfahren weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigen:
- Fig. 1: die eingangs erwähnten Plätze in einem Regalmagazin, wobei die Hauptseite rechts und die Gegenseite links angeordnet sind,
- Fig. 2: schematisch ein Ablaufdiagram zum iterativen Verfahren mit einer Startkonfiguration, bei dem das ganzzahlige lineare Optimierungsverfahren angewandt wird,
- Fig. 3A und Fig. 3B: ein Vorgehen zum Festlegen einer Präzedenz,
- Fig. 4A und Fig. 4B: ein Vorgehen zum Entfernen von Verklemmungen,
- Fig. 5A und Fig. 5B: ein Vorgehen zur Konstruktion eines Graphen G aus der Menge von Tupeln aus Ausgangs- und Zielmagazinplatz,
- Fig. 6: das Ergebnis des konstruierten Graphen,
- Fig. 7: eine zulässige Tour auf dem Graphen,
- Fig. 8A und Fig. 8B: einen Transport zu einem direkt und indirekt erreichbaren zulässigen Magazinplatz.

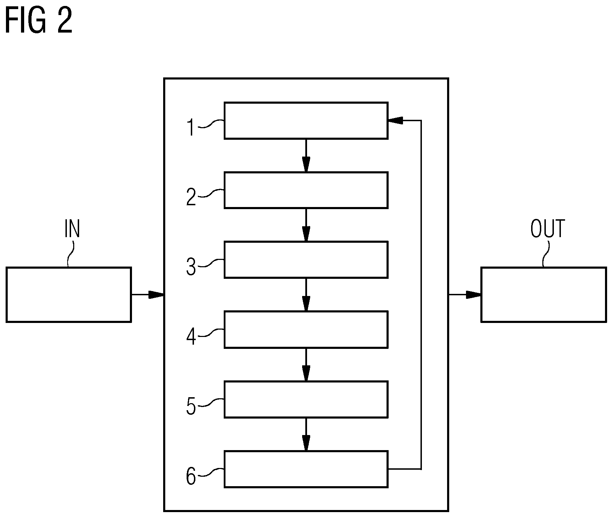

Gemäß Figur 2 ist der Input bzw. die Eingabe IN, wie bereits oben beschrieben, die Anfangs- und die zu erreichende Zielzuordnung der Werkzeuge auf den Magazinplätzen P im Magazin R. Sowohl die Anfangs- als auch die Zielzuordnung erfüllen alle Platzrestriktionen. Dabei wird eine Menge von Werkzeugen, der Platzbedarfs für jedes Werkzeug, eine Menge von zulässigen belegbaren Magazinplätzen für jedes Werkzeug, die (zulässige) Ausgangsmagazinbelegung und damit des Ausgangsmagazinplatzes für jedes Werkzeug, die zulässige Zielmagazinbelegung und damit die Zielmagazinplätze für zumindest eine Teilmenge aus der erfassten Menge von Werkzeugen, für die ein Werkzeugtransport durchgeführt werden soll, sowie eine Menge von Transportzeitdauern, die jeweils eine Fahrt des Magazingeräts von einem Magazinplatz zu einem anderen Magazinplatz braucht, erfasst.

Ziel ist eine optimierte Transportreihenfolge für Werkzeuge, wobei jedes Werkzeug kollisionsfrei hinsichtlich seines Platzbedarfs von seinem ursprünglichen Magazinplatz zu seinem Zielmagazinplatz transportiert werden soll. Durch die festgelegte Anfangs- bzw. Ausgangs- und Zielzuordnung bzw. Zielmagazinbelegung können jedoch folgende zwei Fälle eintreten:
1. Einige Werkzeuge müssen zuerst von ihrem ursprünglichen Magazinplatz auf einen belegbaren freien oder freigewordenen Magazinplatz wegtransportiert werden, bevor ein anderes Werkzeug darauf platziert werden kann.
2. Transportzyklen existieren.

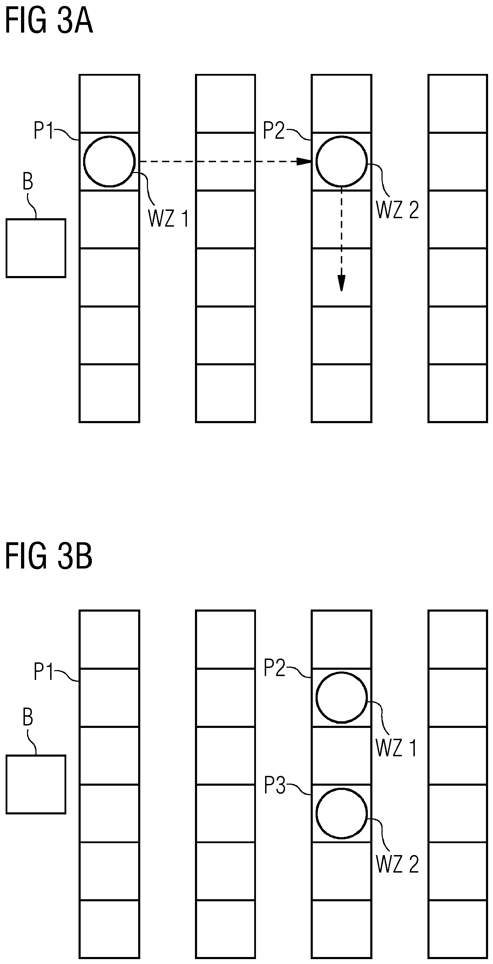

Im ersten Fall ist es sinnvoll, dass Präzedenzen festgelegt werden, die erfordern, dass bestimmte Werkzeuge vor anderen Werkzeugen zu ihrem Zielmagazinplatz transportiert werden. Beispielsweise wird in Figur 3A das Werkzeug WZ2 zuerst zu seinem Zielmagazinplatz P3 gebracht werden, bevor Werkzeug WZ1 von seinem Magazinplatz P1 zu seinem Zielmagazinplatz P2 gebracht werden kann (siehe Figur 3B). Es können in Schritt 1 von Figur 2 Vorgängerbeziehung bzw. Abhängigkeiten für die Werkzeugtransporte ermittelt werden, wonach sich Präzedenzen für die Werkzeugtransporte ergeben bzw. gebildet werden. In Figur 3A ist zudem der eingangs erläutere Bereitstellungsplatz mit B gekennzeichnet.

Bei der Bestimmung der Präzedenzen kann der oben beschriebene zweite Fall eintreten und es können Verklemmungen bzw. Transportzyklen sichtbar werden, welche zuerst aufgelöst werden müssen. Die Transportzyklen können in Schritt 2 von Figur 2 mittels einer Tiefensuche in polynomialer Laufzeit gefunden werden.

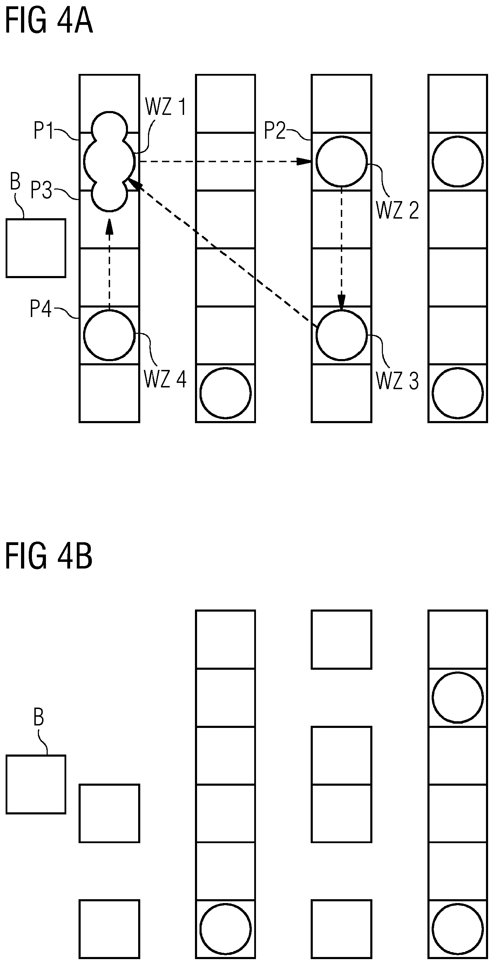

Transportzyklen wirken sich beispielsweise so aus, dass ein Werkzeug z.B. WZ1 den Magazinplatz P2 des Werkzeugs WZ2 benötigt, Werkzeug WZ2 den Magazinplatz von Werkzeug WZ3 und im vorliegenden Fall gemäß Figur 4A ein weiteres Werkzeug WZ3 den Magazinplatz P1 von Werkzeug WZ1 und somit eine Verklemmung in Form eines Ringschlusses, auch Deadlock genannt, eintritt. Bevor die Transportzyklen aufgelöst werden, werden diese zunächst entfernt. Das Ergebnis ist in Figur 4B gezeigt. Das heißt, alle Werkzeuge, die einem Transportzyklus angehören und zusätzlich alle Werkzeuge, die Nachfolgepräzedenzen zu Werkzeugen in Transportzyklen aufweisen (z.B. Werkzeug WZ 4 in Figur 4A), werden gemäß Schritt 3 von Figur 2 mit den zugehörigen Anfangs- und Zielmagazinplätzen aus der Problemstellung gelöscht bzw. entfernt bzw. zunächst im weiteren Vorgehen nicht betrachtet. Die gestrichelten Pfeile in Figur 4A deuten die durchzuführenden Werkzeugtransfers an. Beispielsweise soll Werkzeug WZ1 von (Magazin-)Platz P1 zu (Magazin-)Platz P2 gebracht werden. Die Werkzeuge WZ1, WZ2 und WZ3 bilden einen Transportzyklus. Da das Werkzeug WZ1 übergroß ist, überdeckt es nicht nur Platz P1 sondern auch (Magazin-)Platz P3, auf den das Werkzeug WZ4 transportiert werden soll. Das heißt, Werkzeug WZ1 muss vor Werkzeug WZ4 auf seinen Zielmagazinplatz gebracht werden. Damit wird für WZ4 eine Nachfolgepräzedenz zu einem Werkzeug aus dem Transportzyklus induziert. Die Figur 4B zeigt das reduzierte Magazin, wobei sich die verbleibenden Werkzeuge kollisionsfrei zu einem anderen (Ziel-)Magazinplatz transportiert werden können.

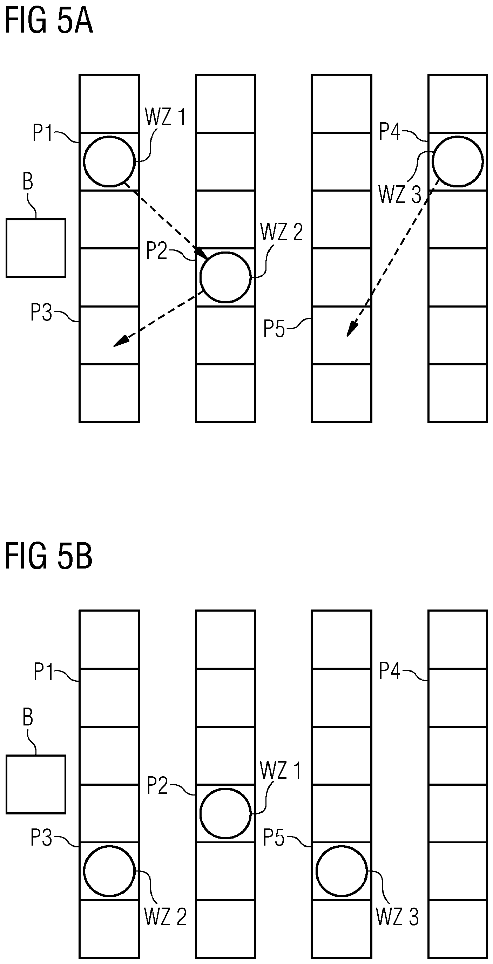

Das Ergebnis nach dem Löschvorgang ist dann die Menge der durchzuführenden Werkzeugtransfers (siehe Schritt 4 von Figur2), welche keine Transportzyklen mehr induzieren. Es ist dann in Schritt 5 von Figur 2 die Reihenfolge der Werkzeugtransfers - bzw. transporte festzulegen und zu optimieren, die abschließend durchgeführt werden. Dazu wird ein gemischt ganzzahliges Programm (MIP) benutzt, welches die Präzedenzen modelliert und die Reihenfolge der Werkzeugtransfers ermittelt, so dass die Summe der Transportzeitdauern minimiert wird. Zur Berechnung der Reihenfolge der Werkzeugtransfers wird die MIP Formulierung eines asymmetrischen Traveling Salesman Problems (ATSP) mit Präzedenzrestriktionen verwendet. Die Lösung des MIPs liefert einen ersten Teil des Ergebnisses, das in Figur 2 mit OUT bezeichnet wird. Das Ergebnis ist eine Transferliste. Da keine Transportzyklen mehr existieren, die Präzedenzen im Modell berücksichtigt sind und sowohl die Anfang- als auch die Zielzuordnung zulässig sind, ist sichergestellt, dass die Lösung des MIPs eine Reihenfolge für das Umsortieren liefert, bei der zu jedem Zeitpunkt die Zulässigkeit aller auftretenden Magazinbelegungen eingehalten wird. Eine detaillierte Beschreibung des Vorgehens folgt nachstehend zu den Figuren 5A, 5B, 6, 7 und 8. Normalerweise kann das ATSP-MIP mit Präzedenzen meist innerhalb weniger Sekunden gelöst werden.

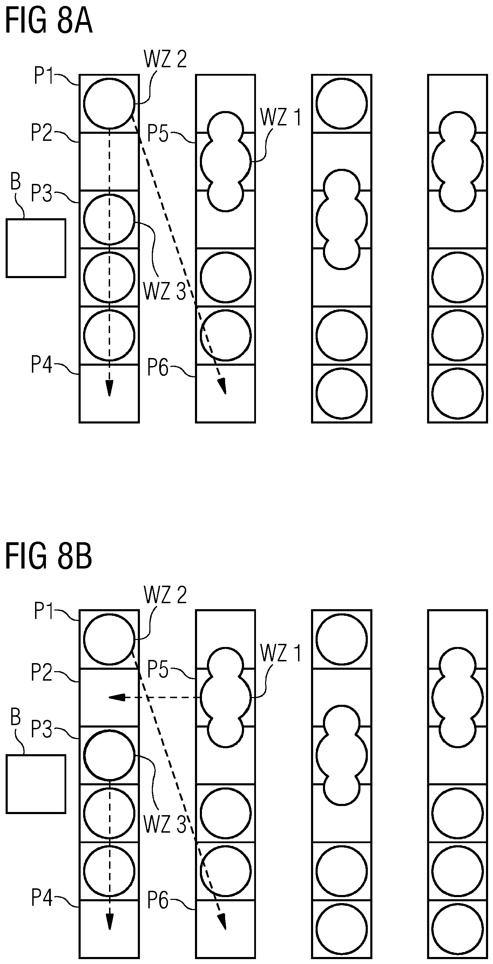

Im nächsten Schritt 6 von Figur 2 müssen die zwischenzeitlich entfernten Transportzyklen aufgelöst werden, da kein weiterer kollisionsfreier Transfer der Werkzeuge mehr möglich ist. Deshalb müssen Werkzeuge aus den Transportzyklen auf anderen Magazinplätzen temporär geparkt und entsprechende Magazinplätze zuerst freigeräumt werden. Das Auflösen der Transportzyklen wird genauer nachfolgend zu Figur 8A und 8B beschrieben.

Dadurch erhält man wieder kollisionsfrei ausführbare Werkzeugtransfers, für die mit der oben beschriebenen Prozedur erneut die Reihenfolge der Werkzeugtransfers bestimmt werden kann. Die so ermittelten Werkzeugtransfers werden zur Transferliste hinzugefügt. Das heißt, es werden zunächst die Präzedenzen bestimmt, danach die Transportzyklen, welche entfernt werden müssen, und schließlich wird das ATSP MIP mit Präzedenzen verwendet, um die Reihenfolge der Werkzeugtransfers festzulegen. Dieses Verfahren wird so lange durchgeführt, bis alle Transportzyklen aufgelöst und die Transportreihenfolge der zugehörigen Werkzeugtransfers berechnet und/oder vorgegeben wurde oder keine weiteren Transportzyklen mehr aufgelöst werden können. Es wird eine Teilmenge von Werkzeugtransporten, so dass die Werkzeuge in dieser Transportreihenfolge kollisionsfrei hinsichtlich des Platzbedarfs von ihrem belegten Magazinplatz zu ihrem Zielmagazinplatz gebracht werden können, bestimmt.

Der Output bzw. die Ausgabe ist eine Transferliste, die die Reihenfolge der Werkzeugtransfers enthält und für jedes Werkzeug, das umgelagert werden muss, den Anfangs- bzw. Ausgangsmagazinplatz und den Zielmagazinplatz enthält.

Gemäß der Transferliste werden schließlich die tatsächlichen Werkzeugtransporte gemäß der optimierten Reihenfolge durchgeführt.

Zur Ermittlung der Reihenfolge der Werkzeugtransfers und zur Minimierung der Umsortierzeitdauer wird zweckmäßigerweise vorausgesetzt, dass die Präzedenzen bereits bestimmt sind und Transportzyklen aufgelöst oder entfernt wurden. Weiter gilt die Annahme, dass jedes Werkzeug direkt von seinem Anfangszu seinem Zielmagazinplatz gebracht wird. Daher werden freie Magazinplätze, die weder Anfangs- noch Zielmagazinplätze eines Werkzeuges sind, nicht benutzt und müssen demnach nicht betrachtet werden (d.h. sie können gelöscht werden). Zusammengefasst gelten folgende Voraussetzungen:
- Alle betrachteten Magazinplätze sind entweder Anfangs- oder Zielmagazinplätze eines Werkzeugs.
- Es existieren keine Transportzyklen.
- Präzedenzen für die Werkzeugtransfers sind gegeben.

Werden alle Präzedenzen eingehalten und jedes Werkzeug direkt von seinem Anfangs- zu seinem Zielmagazinplatz transportiert, folgt daraus, dass die Zulässigkeit der Magazinbelegung während des gesamten Umlagerungsprozesses erfüllt ist. Durch die Fixierung des Anfangs- und des Zielmagazinplatzes für jedes Werkzeug, ist auch die Transportzeitdauer, um ein Werkzeug von seinem Anfangs- zu seinem Zielmagazinplatz zu bringen, festgelegt. Daher müssen lediglich die Transferzeiten für Leerfahrten des Magazingeräts, von einem Magazinplatz an dem ein Werkzeug abgelegt wurde zu dem nächsten Magazinplatz an dem ein Werkzeug aufgenommen wird, optimiert werden.

Dieses Problem kann als asymmetrisches Traveling Salesman Problem (ATSP) mit Präzedenzen modelliert werden. Das ATSP lässt sich wie folgt definieren: Sei eine Menge von Städten (Knoten) N={1,....,n} gegeben. Für jedes Paar an Städten (Knoten) i,j beschreibt *cᵢⱼ* die Kosten der Fahrt zwischen diesen Städten. Aufgabe ist es, eine Rundreise (Tour) zu bestimmen, die jede Stadt (Knoten) genau einmal besucht und dessen Gesamtkosten minimal sind. Das ATSP kann als Graphproblem moelliert werden. Der Graph G=(N,E) wird durch die Knotenmenge N und die Kantenmenge E definiert, wobei eine Kante (i,j) in der Kantenmenge E enthalten ist, wann immer eine Fahrt (Verbindung) zwischen zwei Städten (Knoten) möglich sind. Die Kosten *cᵢⱼ* definieren die Kantengewichte. Gesucht ist eine Tour in G, so dass die Summe der Kantengewichte der besuchten Kanten minimal ist. Ist zusätzlich als Input noch eine Menge von Präzedenzen gegeben, beispielsweise in der Form "Knoten i vor Knoten j", so ist eine optimale Tour gesucht, die alle Präzedenzen berücksichtigt. Das heißt, der Knoten i liegt in der Tour vor dem Knoten j.

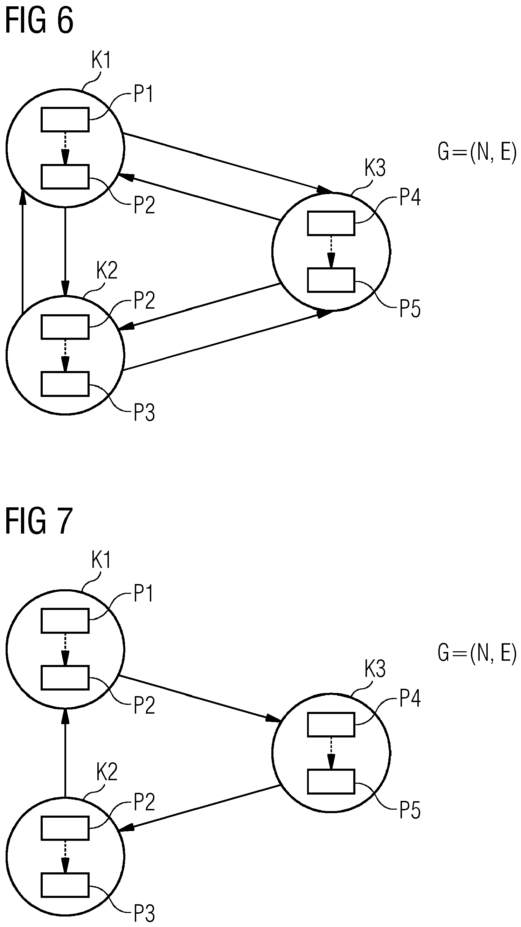

Für das Umsortierproblem, kann ein Graph G=(N,E) wie folgt definiert werden. Jedes fixierte Anfangs-Zielmagazinplatzpaar bzw. -tupel bildet einen Knoten. Demnach kann die Menge aller Anfangs-Zielmagazinplatzpaare als die Knotenmenge N des Graphen G identifiziert werden. Kanten zwischen zwei Knoten i und j aus der Knotenmenge N stehen für eine mögliche Leerfahrt. Die Kantengewichte *cᵢⱼ* entsprechen den Leerfahrtzeitdauern zwischen Zielmagazinplatz von Knoten i und dem Anfangsmagazinplatz von Knoten j. Das folgende Beispiel gemäß den Figuren 5A, 5B und 6 zeigt die Transformation des Problems der Werkzeugumsortierung in eine ATSP-Instanz. Gegeben seien die drei Werkzeuge WZ1, WZ2 und WZ3 und die Anfangszuordnung (siehe Figur 5A) und Zielzuordnung (siehe Figur 5B): Der Graph G=(N,E) wird folgendermaßen konstruiert: Jedes Anfangs-Zielmagazinplatz-Paar definiert einen Knoten. Jeder Knoten repräsentiert also einen fixierten Werkzeugtransfer eines Werkzeuges von seinem Anfang- zu seinem Zielmagazinplatz. Damit besteht die Knotenmenge N des Graphen aus drei Knoten K1, K2, K3. Die Kanten des Graphen sind die möglichen Leerfahrten und die Kantengewichte geben die Leerfahrzeitdauern an. So entspricht beispielsweise das Kantengewicht *c*_{*K*2*,K*2} der Zeit, die eine Leerfahrt von Platz P3 zu Platz P4 benötigt. Umgekehrt definiert *c*_{*K*3*,K*2} die Zeitdauer für eine Leerfahrt von Platz P5 zu Platz P2.

In obigen Beispiel muss lediglich eine Präzedenz betrachtet werden, nämlich dass Werkzeug WZ2 zuerst von Platz P2 zu Platz 3 transportiert wird, bevor Werkzeug WZ1 von Platz P1 zu Platz 2 gebracht wird. Eine mögliche Lösung für eine Tour auf dem Graphen G=(N,E), welche diese Präzedenz beachtet, ist Figur 7 angegeben. Die Tour startet bei Knoten K3 d.h. das Werkzeug WZ3 wird von Platz P4 zu Platz P5 gebracht, danach erfolgt eine Leerfahrt von Platz P5 zu Platz P2, im Anschluss daran wird Werkzeug WZ2 aufgenommen und von Platz P2 zu Platz P3 gebracht, es folgt wiederum eine Leerfahrt von Platz P3 zu Platz P1. Von dort aus wird Werkzeug WZ1 zu seinem Zielplatz P2 gebracht. Das ATSP mit Präzedenzen lässt sich als gemischt ganzzahliges Programm (MIP) modellieren. Beispielsweise kann das ATSP mit Präzedenzen mit der MIP-Formulierung aus dem im Jahre 2004 publizierten Artikel *"New tighter polynomial length formulations for the asymmetric traveling salesman problem with and without precedence constraints"* von Subhash C. Sarin, Hanif D. Sherali, Ajay Bhootra (https://doi.org/10.1016/j.orl.2004.03.007) modelliert werden, wobei die darin angegebenen Städte (cities) durch die oben bereits beschriebenen Knoten ersetzt werden.

Mit einer einfachen im Nachfolgenden beschriebenen Präzedenzberücksichtigenden Nearest-Neighbour (nächstgelegender Nachbar) Heuristik lässt sich zudem sehr schnell eine zulässige Startlösung für das MIP berechnen. Dies garantiert auch für sehr schwer lösbare Instanzen immer erlaubte Lösungen.

In der Nearest-Neighbour Heuristik wird zu Beginn ein Knoten im Graphen G besucht, für den keine Vorgänger-Präzedenzen vorhanden sind. Anschließend wird unter den dann aus Präzedenzsicht möglichen und noch nicht besuchten Knoten derjenige gewählt, für den das Kantengewicht zu dem zuletzt besuchten Knoten minimal ist. Dies wird solange wiederholt bis alle Knoten besucht wurden.

Für das Auflösen von Transportzyklen ist die Anwendung folgender Heuristik möglich. Zunächst wird eine Methode benötigt, um einen einzelnen Werkzeugtransfer ausführen zu können, der die Platzrestriktionen berücksichtigt. Das Werkzeug, das in den Transportzyklus involviert ist und das verschoben werden soll, wird im Folgenden Transferwerkzeug genannt. Die Funktion Werkzeugtransfer (Transferwerkzeug) überprüft, ob es für ein gegebenes Werkzeug (Transferwerkzeug) einen Magazinplatz gibt, auf den es von seinem aktuellen Magazinplatz verschoben werden kann. Möglicherweise müssen dazu zuerst weitere Werkzeuge weggeräumt werden, um einen solchen Platz zu schaffen. Die Funktion lautet:

Werkzeugtransfer (Transferwerkzeug){
1. Versuche für das Transferwerkzeug einen direkten Transfer
2. Falls kein direkter Transfer möglich, versuche einen indirekten Transfer
3. Andernfalls wird kein Transfer ausgeführt }

Der direkte Transfer sucht für das Transferwerkzeug einen freien und zulässigen Platz, auf den es kollisionsfrei transportiert werden kann, ohne dass weitere Werkzeuge im Magazin verschoben werden müssen. Ist dies möglich, wird der Transfer sofort durchgeführt. Ansonsten wird ein indirekter Transfer versucht. Dabei wird ein Magazinplatz gesucht, welcher durch einen direkten Transfer von einem oder mehreren Werkzeugen im Magazin für das Transferwerkzeug frei geräumt werden kann. Die direkten Transfers der anderen Werkzeuge werden zuerst realisiert, danach wird das Transferwerkzeug verschoben. Ist weder ein direkter noch ein indirekter Transfer möglich, so wird für das Werkzeug kein Transfer durchgeführt. In Figur 8A sind der direkte und in Figur 8B der indirekte Transfer dargestellt. Für Werkzeug WZ2 kann ein direkter Transfer auf den kollisionsfrei erreichbaren Platz P4 oder Platz P6 ausgeführt werden. Für das übergroße Werkzeug WZ1 ist ein direkter Transfer nicht möglich, da dieses Werkzeug jeweils drei Magazinplätze belegt. Jedoch ist ein indirekter Transfer für Werkzeug WZ1 auf den indirekt erreichbaren Platz P2 realisierbar, wenn Werkzeug WZ2 und Werkzeug WZ3 jeweils durch einen direkten Transfer auf Platz P4 bzw. Platz P6 zuvor verschoben werden. Mit Hilfe der Funktion Werkzeugtransfer (Transferwerkzeug) können nun die Transportzyklen aufgelöst werden. Für die Werkzeuge eines Transportzyklus wird nacheinander die Funktion Werkzeugtransfer (Transferwerkzeug) aufgerufen. Ist für ein Werkzeug ein Werkzugtransfer möglich, so wird dieser durchgeführt und damit der betrachtete Transportzyklus aufgelöst. Ist für kein Werkzeug des Transportzyklus ein Werkzeugtransfer möglich, so kann der Transportzyklus nicht aufgelöst werden.

Anschließend können die Werkzeugtransfers zur Auflösung der Transportzyklen mit in die Optimierung der Werkzeugtransportreihenfolge einfließen. Sie werden der oben genannten Transferliste hinzugefügt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Verfahren zur rechnergestützten Optimierung von Werkzeugtransporten für mindestens ein eine Anzahl von Magazinplätzen (P) aufweisendes Werkzeugmagazin (R), das für eine Werkzeugmaschine verwendbar ist, welche zur Fertigung von einem oder mehreren Werkstücken mit Hilfe der von einem Magazingerät an einem Bereitstellungsplatz (B) bereitgestellten Werkzeuge eingesetzt wird,
aufweisend folgende Schritte:
a) Erfassen einer Menge von Werkzeugen,
b) Erfassen des Platzbedarfs für jedes Werkzeug,
c) Erfassen einer Menge von belegbaren Magazinplätzen für jedes Werkzeug,
d) Erfassen einer zulässigen Ausgangsmagazinbelegung, wobei ein Ausgangsmagazinplatz für jedes Werkzeug erfasst wird,
e) Erfassen der zulässigen Zielmagazinbelegung, wobei Zielmagazinplätze für zumindest eine Teilmenge aus der erfassten Menge von Werkzeugen erfasst werden, für die ein Werkzeugtransport durchgeführt werden soll,
f) Erfassen einer Menge von Transportzeitdauern, die jeweils eine Fahrt des Magazingeräts von einem Magazinplatz zu einem anderen Magazinplatz braucht,
g) Bestimmen einer Teilmenge von Werkzeugtransporten, für die eine Transportreihenfolge vorgebbar oder vorgegeben ist, so dass die Werkzeuge in dieser Transportreihenfolge kollisionsfrei hinsichtlich des Platzbedarfs von ihrem belegten Magazinplatz zu ihrem Zielmagazinplatz gebracht werden können, und
h) Optimierung der Transportreihenfolge für diese Teilmenge von Werkzeugtransporten derart, dass die Summe der für diese Werkzeugtransporte benötigten Transportzeitdauern minimiert wird,
wobei die Werkzeugtransporte anhand der optimierten Transportreihenfolge durchgeführt werden.

2. Verfahren nach dem vorhergehenden Anspruch, **dadurch gekennzeichnet, dass** die Schritte g) und h) gegebenenfalls mehrfach wiederholt werden bis alle in Schritt e) erfassten Werkzeuge ihren Zielmagazinplatz erreicht haben.

3. Verfahren nach einem der vorhergehenden Ansprüche, **dadurch gekennzeichnet, dass** die Menge von Transportzeitdauern eine Menge von Leerfahrtzeitdauern für jede werkzeuglose Fahrt des Magazingeräts von einem Magazinplatz zu einem anderen Magazinplatz umfasst.

4. Verfahren nach einem der vorhergehenden Ansprüche, **dadurch gekennzeichnet, dass** für ein Werkzeug, das seinen Zielmagazinplatz belegt, die Menge der von ihm belegbaren Magazinplätzen auf den Zielmagazinplatz reduziert wird.

5. Verfahren nach einem der vorhergehenden Ansprüche, **dadurch gekennzeichnet, dass** zumindest ein Werkzeug aus der erfassten Menge von Werkzeugen von seinem belegten Magazinplatz auf einen anderen belegbaren Magazinplatz kollisionsfrei transportiert wird, um eine mindestens einelementige Teilmenge von Werkzeugtransporten gemäß Schritt g) von Anspruch 1 zu bestimmen und um mit Schritt h) von Anspruch 1 fortzufahren.

6. Verfahren nach einem der vorhergehenden Ansprüche, **dadurch gekennzeichnet, dass** die Schritte g) und h) von Anspruch 1 gegebenenfalls mehrfach wiederholt werden, solange in Schritt g) mindestens eine einelementige Teilmenge bestimmt werden kann.

7. Verfahren nach einem der vorhergehenden Ansprüche, **dadurch gekennzeichnet, dass** die genannte Teilmenge von Werkzeugtransporten aus Schritt g) von Anspruch 1 ermittelt wird durch:
a) Bilden von Präzedenzen für die Werkzeugtransporte,
b) Ermitteln von Werkzeugtransporten, die in Verklemmungen bei der Belegung der Magazinplätze für die Werkzeugtransporte involviert sind,
c) Bestimmung von Werkzeugtransporten, die in einer Folgeabhängigkeit zu den ermittelten Verklemmungen stehen,
d) Bestimmung der Teilmenge von Werkzeugtransporten unter Ausschluss der in b) und c) ermittelten Werkzeugtransporte.

8. Verfahren nach einem der vorhergehenden Ansprüche 5 oder 6 und nach Anspruch 7, **dadurch gekennzeichnet, dass** zumindest ein Werkzeug aus der erfassten Menge von Werkzeugen, das in eine Verklemmung oder in eine Folgeabhängigkeit involviert ist, von dem von ihm belegten Magazinplatz auf einen anderen belegbaren Magazinplatz kollisionsfrei transportiert wird, um eine mindestens einelementigen Teilmenge von Werkzeugtransporten gemäß Schritt g) von Anspruch 1 zu bestimmen und um mit Schritt h) von Anspruch 1 fortzufahren.

9. Verfahren nach einem der vorhergehende Ansprüche, **dadurch gekennzeichnet, dass** zumindest ein Werkzeug aus der erfassten Menge von Werkzeugen von dem von ihm belegten Magazinplatz auf einen anderen belegbaren Magazinplatz kollisionsfrei transportiert wird, damit mindestens ein in eine Verklemmung oder in eine Folgeabhängigkeit involviertes Werkzeug kollisionsfrei von seinem Magazinplatz auf diesen freigewordenen belegbaren Magazinplatz transportiert werden kann, um eine mindestens einelementige Teilmenge von Werkzeugtransporten gemäß Schritt g) von Anspruch 1 zu bestimmen und um mit Schritt h) von Anspruch 1 fortzufahren.

10. Verfahren nach einem der vorhergehenden Ansprüche 7 bis 9, **dadurch gekennzeichnet, dass** die Verklemmungen durch eine Breiten- oder Tiefensuche in polynomialer Laufzeit ermittelt werden.

11. Verfahren nach einem der vorhergehenden Ansprüche 7 bis 10, **dadurch gekennzeichnet, dass** die Folgeabhängigkeiten zu den ermittelten Verklemmungen durch eine Breiten- oder Tiefensuche in polynomialer Laufzeit ermittelt werden.

12. Verfahren nach einem der vorhergehenden Ansprüche, **dadurch gekennzeichnet, dass** die genannte Optimierung mittels nächstgelegener-Nachbar-Heuristik durchgeführt wird.

13. Verfahren nach einem der vorhergehenden Ansprüche 1 bis 11, **dadurch gekennzeichnet, dass** die genannte Optimierung mittels gemischt ganzzahliger linearer Optimierung durchgeführt wird.

14. Verfahren nach dem vorhergehenden Anspruch, **dadurch gekennzeichnet, dass** ein Modell für die gemischt ganzzahlige lineare Optimierung als sogenanntes asymmetrisches Traveling Salesman Problem unter Berücksichtigung der Präzedenzen formuliert wird.

15. Verfahren nach einem der vorhergehenden Ansprüche 12 bis 14, **dadurch gekennzeichnet, dass** für eine Startkonfiguration des Modells eine Berechnung aus einer nächstgelegener-Nachbar-Heuristik verwendet werden kann.

16. Verfahren nach einem der vorhergehenden Ansprüche 14 oder 15, **dadurch gekennzeichnet, dass** die Knoten des dem genannten asymmetrischen Traveling Salesman Problem zugrundliegenden Graphen jeweils durch ein Tupel bestehend aus Ausgangs- und Zielmagazinplatz aus der erfassten Teilmenge an Werkzeugtransporten repräsentiert wird, deren Ausgangs- und Zielmagazinplatz unterschiedlich sind.

17. Verfahren nach den vorhergehenden Ansprüchen 14 bis 16, **dadurch gekennzeichnet, dass** die Kanten des dem genannten asymmetrische Traveling Salesman Problem zugrundliegenden Graphen jeweils durch eine Gewichtung ergänzt werden, die sich jeweils aus einer Leerfahrtzeitdauer von einem Zielmagazinplatz des vorangehenden Knotens zu einem Ausgangsmagazinplatz des nachfolgenden Knotens ergibt.

18. Steuereinrichtung zur rechnergestützten Optimierung von Werkzeugtransporten einer Werkzeugtransportreihenfolge für mindestens ein eine Anzahl von Magazinplätzen (P) aufweisendes Werkzeugmagazin (R), das für eine Werkzeugmaschine verwendbar ist, welche zur Fertigung von einem oder mehreren Werkstücken mit Hilfe der von einem Magazingerät an einem Bereitstellungsplatz bereitgestellten Werkzeuge eingesetzt wird,
aufweisend:
a) Erfassungseinheit zum Erfassen einer Menge von Werkzeugen,
b) dieselbe oder eine weitere Erfassungseinheit zum Erfassen des Platzbedarfs für jedes Werkzeug,
c) dieselbe oder eine weitere Erfassungseinheit zum Erfassen einer Menge von belegbaren Magazinplätzen für jedes Werkzeug,
d) dieselbe oder eine weitere Erfassungseinheit zum Erfassen einer zulässigen Ausgangsmagazinbelegung, wobei ein Ausgangsmagazinplatz für jedes Werkzeug erfasst wird,
e) dieselbe oder eine weitere Erfassungseinheit zum Erfassen der zulässigen Zielmagazinbelegung, wobei Zielmagazinplätze für zumindest eine Teilmenge aus der erfassten Menge von Werkzeugen erfasst werden, für die ein Werkzeugtransport durchgeführt werden soll,
f) dieselbe oder eine weitere Erfassungseinheit zum Erfassen einer Menge von Transportzeitdauern, die jeweils eine Fahrt des Magazingeräts von einem Magazinplatz zu einem anderen Magazinplatz braucht,
g) eine Bestimmungseinheit zum Bestimmen einer Teilmenge von Werkzeugtransporten, für die eine Transportreihenfolge vorgebbar oder vorgegeben ist, so dass die Werkzeuge in dieser Transportreihenfolge kollisionsfrei hinsichtlich des Platzbedarfs von ihrem belegten Magazinplatz zu ihrem Zielmagazinplatz gebracht werden können, und
h) eine Optimierungseinheit zur Optimierung der Transportreihenfolge für diese Teilmenge von Werkzeugtransporten derart, dass die Summe der für diese Werkzeugtransporte benötigten Transportzeitdauern minimiert ist oder wird,
wobei die Werkzeugtransporte anhand der optimierten Transportreihenfolge durchgeführt werden.

19. Computerprogrammprodukt mit Programmcodemitteln zur Durchführung des Verfahrens nach einem der vorangehenden Verfahrensansprüche, wenn es auf einer Steuereinrichtung nach einem der vorangehenden Steuereinrichtungsansprüche abläuft oder auf einem computerlesbaren Medium gespeichert ist.

## Claims

1. Method for the computer-aided optimization for tool transporting operations for at least one tool magazine (R) which has a number of magazine locations (P) and which can be used for a machine tool which is used to produce one or more workpieces using the tools provided by a magazine device at a provision location (B), having the following steps:
a) detecting a quantity of tools,
b) detecting the space required for each tool,
c) detecting a quantity of magazine locations which can be occupied for each tool,
d) detecting a permissible initial magazine occupancy, wherein an initial magazine location is detected for each tool,
e) detecting the permissible target magazine occupancy, wherein target magazine locations are detected for at least one subset of the detected quantity of tools for which a tool transporting operation is to be carried out,
f) detecting a quantity of transportation time periods which are respectively required by a movement of the magazine device from one magazine location to another magazine location,
g) determining a subset of tool transporting operations for which a transportation sequence can be specified or is specified, so that in this transportation sequence the tools can be moved to their target magazine location without a collision in respect of the space required by their occupied magazine location, and
h) optimizing the transportation sequence for this subset of tool transporting operations in such a way that the sum of the transportation time periods required for these tool transporting operations is minimized,
wherein the tool transporting operations are carried out on the basis of the optimized transportation sequence.

2. Method according to the preceding claim, **characterized in that** the steps g) and h) are, where appropriate, carried out repeatedly until all of the tools detected in step e) have reached their target magazine location.

3. Method according to either of the preceding claims, **characterized in that** the quantity of transportation time periods comprises a quantity of empty movement time periods for each tool-less movement of the magazine device from one magazine location to another magazine location.

4. Method according to one of the preceding claims, **characterized in that** the quantity of magazine locations which can be occupied by a tool which occupies its target magazine location is reduced to the target magazine location.

5. Method according to one of the preceding claims, **characterized in that** at least one tool from the detected quantity of tools is transported without a collision from its occupied magazine location to another magazine location which can be occupied, in order to determine a subset of tool transporting operations which has at least one element according to step g) of Claim 1, and in order to continue with step h) of Claim 1.

6. Method according to one of the preceding claims, **characterized in that** the steps g) and h) of Claim 1 are, where appropriate, carried out repeatedly as long as at least one subset which contains a single element can be determined in step g).

7. Method according to one of the preceding claims, **characterized in that** the specified subset of tool transporting operations from step g) of Claim 1 is determined by:
a) forming precedencies for the tool transporting operations,
b) determining tool transporting operations which are involved in jamming during the occupation of the magazine locations for the tool transporting operations,
c) determining tool transporting operations which have a sequential dependence on the determined instances of jamming,
d) determining the subset of tool transporting operations with the exclusion of the tool transporting operations determined in b) and c).

8. Method according to one of the preceding Claims 5 or 6 and according to Claim 7, **characterized in that** at least one tool from the detected quantity of tools which is involved in jamming or in a sequential dependence is transported without a collision from the magazine location which is occupied by it to another magazine location which can be occupied, in order to determine a subset of tool transporting operations which has at least one element according to step g) of Claim 1 and to continue with step h) of Claim 1.

9. Method according to one of the preceding claims, **characterized in that** at least one tool from the detected quantity of tools is transported without a collision from the magazine location which is occupied by it to another magazine location which can be occupied, so that at least one tool which is involved in jamming or in a sequential dependence can be transported without a collision from its magazine location to this magazine location which can be occupied and which has become free, in order to determine at least one subset of tool transporting operations which has at least one element according to step g) of Claim 1 and to continue with step h) of Claim 1.

10. Method according to one of the preceding Claims 7 to 9, **characterized in that** the instances of jamming are determined by means of a width-first search or depth-first search in a polynomial running time.

11. Method according to one of the preceding Claims 7 to 10, **characterized in that** the sequential dependencies are determined with respect to the determined instances of jamming by means of a width-first search or depth-first search in a polynomial running time.

12. Method according to one of the preceding claims, **characterized in that** the abovementioned optimization is carried out by means of a nearest neighbour heuristic.

13. Method according to one of the preceding Claims 1 to 11, **characterized in that** the abovementioned optimization is carried out by means of mixed integral linear optimization.

14. Method according to the preceding claim, **characterized in that** a model for the mixed integral linear optimization is formulated as what is referred to as an asymmetrical travelling salesman problem taking into account the precedencies.

15. Method according to one of the preceding Claims 12 to 14, **characterized in that** for a starting configuration of the model it is possible to use a calculation from a nearest neighbour heuristic.

16. Method according to one of the preceding Claims 14 or 15, **characterized in that** the nodes of the graph on which the abovementioned asymmetrical travelling salesman problem is based are each represented by a tuple composed of an initial magazine location and target magazine location from the detected subset of machine transporting operations whose initial magazine location and target magazine location are different.

17. Method according to one of the preceding Claims 14 to 16, **characterized in that** the edges of the graph on which the abovementioned asymmetrical travelling salesman problem is based are each supplemented by a weighting which respectively results from an empty movement time period from a target magazine location of the preceding node to an initial magazine location of the following node.

18. Control device for the computer-aided optimization of tool transporting operations of a tool transporting sequence for at least one tool magazine (R) which has a number of magazine locations (P) and which can be used for a machine tool which is used to produce one or more workpieces using the tools provided by a magazine device at a provision location, having:
a) a detection unit for detecting a quantity of tools,
b) the same or another detection unit for detecting the space required for each tool,
c) the same or another detection unit for detecting a quantity of machine locations which can be occupied for each tool,
d) the same or other detection unit for detecting a permissible initial magazine occupancy, wherein an initial magazine location is detected for each tool,
e) the same or another detection unit for detecting the permissible target magazine occupancy, wherein target magazine locations are detected for at least one subset of the detected quantity of tools for which a tool transporting operation is to be carried out,
f) the same or another detection unit for detecting a quantity of transportation time periods which respectively requires a movement of the magazine device from one magazine location to another magazine location,
g) a determining unit for determining a subset of machine transporting operations for which a transportation sequence can be specified or is specified so that the tools in this transportation sequence can be moved without a collision with respect to the space requirement from their occupied magazine location to their target magazine location, and
h) an optimization unit for optimizing the transportation sequence for this subset of tool transporting operations in such a way that the sum of the transportation time periods which are required for these tool transporting operations is at a minimum or is minimized,
wherein the tool transporting operations are carried out on the basis of the optimized transportation sequence.

19. Computer program product with program code means for carrying out the method according to one of the preceding method claims when it runs on a control device according to one of the preceding control device claims or is stored in a computer-readable medium.

## Revendications

1. Procédé d'optimisation assisté par ordinateur de transports d'outils pour au moins un magasin d'outils (R), présentant un certain nombre d'emplacements de magasin (P), qui peut être utilisé pour une machine-outil, laquelle est mise en place pour la fabrication d'une ou de plusieurs pièces à l'aide des outils mis à disposition par un appareil du magasin à un emplacement de mise à disposition (B), présentant les étapes suivantes :
a) détection d'une quantité d'outils,
b) détection de l'espace requis pour chaque outil,
c) détection d'une quantité d'emplacements de magasin pouvant être occupés pour chaque outil,
d) détection d'une occupation de magasin initiale admissible, dans lequel un emplacement initial de magasin pour chaque outil est détecté,
e) détection de l'occupation cible admissible du magasin, dans lequel des emplacements de magasin cible pour au moins une quantité partielle de la quantité détectée d'outils sont détectés, pour laquelle un transport d'outil doit être effectué,
f) détection d'une quantité de durées de transport, qui nécessite à chaque fois un trajet de l'appareil du magasin d'un emplacement de magasin à un autre emplacement de magasin,
g) détermination d'une quantité partielle de transports d'outil pour laquelle une succession de transports peut être ou est prédéfinie de sorte que les outils peuvent être transportés dans cette succession de transports sans collision eu égard à l'espace requis, de leur emplacement de magasin occupé à leur emplacement de magasin cible, et
h) optimisation de la succession de transports pour cette quantité partielle de transports d'outil de sorte que la somme des durées de transport nécessaires pour ces transports d'outil est minimisée,
dans lequel les transports d'outil sont effectués à l'aide de la succession de transports optimisée.

2. Procédé selon la revendication précédente, **caractérisé en ce que** les étapes g) et h) sont répétées plusieurs fois, le cas échéant jusqu'à ce que tous les outils détectés à l'étape e) aient atteint leur emplacement de magasin cible.

3. Procédé selon l'une des revendications précédentes, **caractérisé en ce que** la quantité de durées de transport comprend une quantité de durées de marche à vide pour chaque trajet sans outil de l'appareil du magasin, d'un emplacement de magasin à un autre emplacement de magasin.

4. Procédé selon l'une des revendications précédentes, **caractérisé en ce que** pour un outil qui occupe son emplacement de magasin cible, la quantité d'emplacements de magasin pouvant être occupés par lui est réduite à l'emplacement de magasin cible.

5. Procédé selon l'une des revendications précédentes, **caractérisé en ce qu'**au moins un outil de la quantité d'outils détectée est transporté sans collision de son emplacement de magasin occupé à un autre emplacement de magasin pouvant être occupé, pour déterminer une quantité partielle d'au moins un élément de transports d'outil selon l'étape g) de la revendication 1 et pour poursuivre avec l'étape h) de la revendication 1.

6. Procédé selon l'une des revendications précédentes, **caractérisé en ce que** les étapes g) et h) de la revendication 1 sont répétées plusieurs fois, le cas échéant, tant qu'à l'étape g) au moins une quantité partielle à un élément peut être déterminée.

7. Procédé selon l'une des revendications précédentes, **caractérisé en ce que** la quantité partielle mentionnée de transports d'outil de l'étape g) de la revendication 1 est déterminée par :
a) la constitution de précédents pour les transports d'outil,
b) la détermination de transports d'outil qui sont impliqués dans des blocages lors de l'occupation des emplacements de magasin pour les transports d'outil,
c) la détermination de transports d'outil qui se trouvent dans une dépendance de continuité avec les blocages déterminés,
d) la détermination de la quantité partielle de transports d'outil à l'exclusion des transports d'outil déterminés en b) et c) .

8. Procédé selon l'une des revendications précédentes 5 ou 6 et selon la revendication 7, **caractérisé en ce qu'**au moins un outil de la quantité détectée d'outils, qui est impliqué dans un blocage ou dans une dépendance de continuité, est transporté sans collision de l'emplacement de magasin qu'il occupe à un autre emplacement de magasin pouvant être occupé, pour déterminer une quantité partielle d'au moins un élément de transports d'outil selon l'étape g) de la revendication 1 et pour poursuivre avec l'étape h) de la revendication 1.

9. Procédé selon l'une des revendications précédentes, **caractérisé en ce qu'**au moins un outil de la quantité détectée d'outils est transporté sans collision de l'emplacement de magasin qu'il occupe à un autre emplacement de magasin pouvant être occupé, afin qu'au moins un outil impliqué dans un blocage ou dans une dépendance de continuité puisse être transporté sans collision de son emplacement de magasin à cet emplacement de magasin devenu libre pouvant être occupé, pour déterminer une quantité partielle d'au moins un élément de transports d'outil selon l'étape g) de la revendication 1 et pour poursuivre avec l'étape h) de la revendication 1.

10. Procédé selon l'une des revendications précédentes 7 à 9, **caractérisé en ce que** les blocages sont déterminés par une recherche en largeur ou en profondeur en temps polynomial.

11. Procédé selon l'une des revendications précédentes 7 à 10, **caractérisé en ce que** les dépendances de continuité avec les blocages déterminés sont déterminées par une recherche en largeur ou en profondeur en temps polynomial.

12. Procédé selon l'une des revendications précédentes, **caractérisé en ce que** l'optimisation mentionnée est effectuée au moyen de l'heuristique du plus proche voisin.

13. Procédé selon l'une des revendications précédentes 1 à 11, **caractérisé en ce que** l'optimisation mentionnée est effectuée au moyen d'une optimisation linéaire mixte en nombres entiers.

14. Procédé selon la revendication précédente, **caractérisé en ce qu'**un modèle pour l'optimisation linéaire mixte en nombres entiers est formulé en tant que Traveling Salesman Problem asymétrique en tenant compte des précédents.

15. Procédé selon l'une des revendications précédentes 12 à 14, **caractérisé en ce que** pour une configuration de départ du modèle, un calcul à partir d'une heuristique du plus proche voisin peut être utilisé.

16. Procédé selon l'une des revendications précédentes 14 ou 15, **caractérisé en ce que** les noeuds du graphe à la base du Traveling Salesman Problem asymétrique mentionné est représenté à chaque fois par un tuple composé d'un emplacement de magasin initial et cible à partir de la quantité partielle saisie de transports d'outil, dont l'emplacement de magasin initial et cible sont différents.

17. Procédé selon les revendications précédentes 14 à 16, **caractérisé en ce que** les bords du graphe à la base du Traveling Salesman Problem asymétrique sont complétés à chaque fois par une pondération qui résulte à chaque fois d'une durée de marche à vide d'un emplacement de magasin cible du noeud précédent à un emplacement de magasin initial du noeud suivant.

18. Dispositif de commande pour l'optimisation assistée par ordinateur de transports d'outil d'une succession de transports d'outil pour au moins un magasin d'outils (R) présentant un nombre d'emplacements de magasin (P), qui peut être utilisé pour une machine-outil, laquelle est utilisée pour la fabrication d'une ou de plusieurs pièces à l'aide des outils mis à disposition par un appareil du magasin à un emplacement de mise à disposition, présentant :
a) une unité de détection pour détecter une quantité d'outils,
b) la même ou une autre unité de détection pour détecter l'espace requis pour chaque outil,
c) la même ou une autre unité de détection pour détecter une quantité d'emplacements de magasin pouvant être occupés pour chaque outil,
d) la même ou une autre unité de détection pour détecter une occupation de magasin initiale admissible, dans lequel un emplacement de magasin initial pour chaque outil est détecté,
e) la même ou une autre unité de détection pour détecter une occupation cible admissible du magasin, dans lequel des emplacements de magasin cible pour au moins une quantité partielle de la quantité détectée d'outils sont détectés, pour lesquels un transport d'outil doit être effectué,
f) la même ou une autre unité de détection pour détecter une quantité de durées de transport qui nécessite à chaque fois un trajet de l'appareil du magasin d'un emplacement de magasin à un autre emplacement de magasin,
g) une unité de détermination pour déterminer une quantité partielle de transports d'outil, pour laquelle une succession de transports est ou peut être prédéfinie, de sorte que les outils peuvent être apportés dans cette succession de transports sans collision eu égard à l'espace requis de leur emplacement de magasin occupé à leur emplacement de magasin cible, et
h) une unité d'optimisation pour l'optimisation de la succession de transports pour cette quantité partielle de transports d'outil de telle sorte que la somme des durées de transport nécessaires pour ces transports d'outil est ou sera minimisée, dans lequel les transports d'outil sont effectués à l'aide de la succession de transports optimisée.

19. Produit de programme informatique avec des moyens de codage du programme pour effectuer le procédé selon l'une des revendications précédentes, s'il se déroule sur un dispositif de commande selon l'une des revendications de dispositif de commande précédentes ou est enregistré sur un support lisible par ordinateur.
